# EUROPEAN PATENT APPLICATION

(11) **EP 4 495 716 A1**
(43) Date of publication of application: **22.01.2025**
(21) Application number: 23186925.6
(22) Date of filing: 21.07.2023
(51) Int. Cl.: G05B 15/02, G07C 9/00

(54) **METHOD FOR PROVIDING AN UPDATE TO A BUILDING CONTROL UNIT, AND BUILDING MANAGEMENT SYSTEM**

(71) Applicant: dormakaba Schweiz AG, 8623 Wetzikon (CH)
(72) Inventor: Michel, François, 3963 Crans-Montana (CH); Rappel, Christian, 8006 Zürich (CH)
(74) Representative: Balder IP Law, S.L.

(57) **Abstract**

The invention concerns a method 100 for providing an update to a building control unit, hereinafter referred to as BCU 3, of a building management system, hereinafter referred to as BMS 1, comprising: providing 101 a data link 4 between the BCU 3 and a server 2, detecting 102 presence of an authorized service person, hereinafter referred to as ASP 50, in the proximity of the BCU 3 by determine the position of a mobile ASP-device 6 to be carried by the ASP 50, permitting 103 an update of the BCU 3 when presence of the ASP 50 is detected in the proximity of the BCU 3, wherein update-data 5 is sent from the server 2 to the BCU 3 via the data link 4.

## Description

The invention concerns a method for providing an update to a building control unit, hereinafter referred to as BCU, of a building management system, hereinafter referred to as BMS. Further, the invention concerns the building management system for carrying out the method.

The BCU can be for example an access controller for blocking and/or unblocking an access gate, in particular door, gate, turnstile, or any kind of barrier. In some cases, the state of the art provides that updates can only be installed on the BCUs via near field communication; a transmission of the update data from a central server directly to the BCU is excluded in order to comply with certain security standards. However, this means that the installation of the updates is relatively complex and time-consuming.

Therefore, it is the object of the present invention to provide a method and an associated system that enable updates to be performed on BCUs as efficiently as possible while maintaining appropriate security standards.

The object is solved by a method for providing an update to a BCU (building control unit) of a BMS (building management system). The at least one BCU is preferably in or at a building.

**The term "in or at building"** is to be understood broadly and describes preferably the positioning of BCUs in buildings as well in enclosures, for example at gates or doors in fences or walls.

**The BMS** preferably includes software and/or hardware that can be used to visualize and/or control components of the building, in particular BCUs and other components connected to BCUs.

**The BCU** can be any control unit in or at the building that controls one or more components and/or collects data from the component. The BCU can be integrated into the component, or can be arranged as an independent assembly connected to the component.

Preferably, the component is an access controller. Preferably the BCU controls the access controller. Preferably the BCU is part of the access controller or is connected to the access controller. The access controller is preferably adapted for blocking and/or unblocking an access gate, in particular door, gate, turnstile, or any kind of barrier.

The invention is usually described herein based on one BCU, but it is preferably intended that the invention be carried out simultaneously or successively on several BCUs.

The method comprises the step of providing a data link between the at least one BCU and a server. The **server** can be located in the same building as the BCU. However, the server can also be located partially or completely outside the building and connected to the BCU, e.g. via the Internet. The server can be implemented, also as a virtual server and/or via a cloud solution. The data link between the BCU and the server can be completely wired, can be completely wireless, or can be partially wired and partially wireless.

The method comprises the step of detecting, preferably by detecting-means, presence of an ASP (authorized service person) in the proximity of the BCU, in particular by determine the position of a mobile ASP-device to be carried by the ASP. Thus, as soon as a particular ASP-device is in the proximity of the BCU, it is assumed that the ASP is also in the proximity. For the inventive method, it is preferably intended that the ASP-device is not only "to be carried" by the ASP, but is actually carried by the ASP during the method is executed.

**The ASP-device** can be a mobile device that is specially designed for performing service work to the BCU. Preferably, however, the ASP-device is a commercially available smartphone, tablet or laptop that is equipped with appropriate software for the application described here.

The method comprises the step of permitting an update of the BCU when presence of the ASP is detected in the proximity of the BCU, wherein update-data is sent from the server to the BCU via the data link during or before the update is permitted.

The presence of the ASP for the update ensures that an update of the BCU can only take place when the ASP is in the proximity of the BCU. This means that the BCU is locked for updates, at least certain updates, most of the time, which prevents manipulation of the BCU software - corresponding security standards can thus be met. At the same time, however, the data link to the server enables very fast and centrally controlled updates.

In particular, for the entire invention and the present description, the term "permitting an update of the BCU when presence of the ASP is detected in the proximity of the BCU" means: "permitting an update, at least for certain kinds of updates, of the BCU - on the route described herein via the data-link between server and BCU - only when presence of the ASP is detected in the proximity of the BCU". Thereby, it can be avoided that an unauthorized update is executed via the data link. However, the invention does not necessarily exclude that there may be the possibility to perform an update in completely different ways; e.g. via a direct connection between an ASP-device and the BCU.

**The term "update"** preferably means that software of the BCU - which means in particular parts of the software of the BCU - is installed for the first time and/or is supplemented and/or is replaced and/or is deleted and/or is activated and/or is deactivated. The software can in particular be firmware and/or configurations. The above-mentioned "is activated and/or is deactivated" describes in particular the selection of a specific configuration or the change from one configuration to another configuration.

According to the invention, **update-data** is sent from the server to the BCU via the data link. This update-data can include software to be installed for the first time, and/or software which is intended as a supplement, and/or software which is intended as replacement. Additionally or alternatively, the update-data may contain commands that cause the BCU to delete and/or activate and/or deactivate software.

It is provided that the update data is sent to the BCU before the update is permitted. In this case, the BCU prevents the update from being processed until permission has been granted. Preferably, however, the update data is not sent until permission has been granted.

"Processing the update-data" means to install the software (for the first time, as supplement, or as replacement) and/or to perform commands contained in the update-data.

According to knowledge of skilled person, the term **data link** between the BCU and the server describes a link for a direct transmission of data. "Direct" means that no long-term buffer is provided between the server and the BCU, in that the data to be transmitted is buffered for several seconds, in particular several minutes, during its transmission. In particular, it is not a direct connection, if the data is first transferred from the server to a mobile device and then only after seconds or minutes to the BCU. To highlight this, it is preferable defined that the update-data of present invention is sent from the server to the BCU without going through a mobile device, in particular without going through the ASP-device.

Preferably, the update is permitted **automatically,** when presence of the ASP is detected in the proximity of the BCU. Due to the automatic process, preferably no human intervention is required.

In an alternative preferred configuration, it is provided that the update is permitted when presence of the ASP is detected in the proximity of the BCU and when the ASP manually confirms the update. Preferably, the confirmation is performed by the ASP at the ASP-device and/or at the BCU.

Preferably, several updates are kept in a queue, e.g. on the server. As soon as the presence of the ASP is detected, the updates are performed automatically in sequence, or the ASP can change the sequence with the ASP-device and/or can select individual updates.

Preferably, the step of "permitting an update" includes performing the update, in particular:
(i) sending of the update-data from the server to the BCU, when, in particular only when, presence of the ASP is detected in the proximity of the BCU. Thus, the server can initiate the sending of the update-data only when the condition, namely the presence of the ASP, is fulfilled. Preferably, the update-data is sent automatically, when presence of the ASP is detected in the proximity of the BCU; whereby preferably no human intervention is required. Alternative preferably, the update-data is sent when presence of the ASP is detected in the proximity of the BCU and when the ASP manually confirms the update; preferably, the confirmation is performed by the ASP at the ASP-device and/or at the BCU.
(ii) and/or receiving the update-data by the BCU, when, in particular only when, presence of the ASP is detected in the proximity of the BCU. Thus, the BCU can accept the update-data only when the condition, namely the presence of the ASP, is fulfilled. Preferably, the update-data is received automatically, when presence of the ASP is detected in the proximity of the BCU; whereby preferably no human intervention is required. Alternative preferably, the update-data is received when presence of the ASP is detected in the proximity of the BCU and when the ASP manually confirms the update; preferably, the confirmation is performed by the ASP at the ASP-device and/or at the BCU.
(iii) and/or processing the update-data, when, in particular only when, presence of the ASP is detected in the proximity of the BCU. Thus, the BCU may have received the update-data before the condition, namely the presence of the ASP, is met, but the processing, in particular installation, is not executed until the condition is met. Preferably, the update is processed automatically, when presence of the ASP is detected in the proximity of the BCU; whereby preferably no human intervention is required. Alternative preferably, the update is processed when presence of the ASP is detected in the proximity of the BCU and when the ASP manually confirms the update; preferably, the confirmation is performed by the ASP at the ASP-device and/or at the BCU.

Preferably, the permission for the update is blocked after a predetermined time period has elapsed after the detection of the presence and/or as soon as it is detected that the ASP is no longer present. In particular, it is provided that the update remains permitted after the presence has been detected and as long as the time period has not yet elapsed. Preferably, the time period is between one second and one hour. Additionally or alternatively, whether the ASP is present can be detected periodically, for example every few seconds or even more often. If the presence is no longer detected, the permission for the update can be withdrawn immediately or when the time period has elapsed.

Preferably, any update that has already been triggered or started will be completed independently from the presence of the ASP. This is especially advantageous when transferring large volumes of update-data and/or performing longer installation processes, as the ASP does not have to wait until the update is completed.

There are multiple preferred methods for determining the position of the ASP-device. More than one of the methods may be used, for example, to perform the determination more precisely and/or to validate the determination performed with one method with another method. Preferably, at least one of the following methods are provided:
(i) Preferably, the position of the ASP-device is determined by checking if the ASP-device is reachable within a wireless local network, preferably reachable by a particular access point of the wireless local network and/or reachable with a certain RSSI-value. Thus, it may be sufficient to permit the update if the ASP-device is reachable in a certain wireless local network. In order to determine the exact position, thus ensuring that the ASP is as close as possible to the BCU, it may be provided that the ASP is only considered to be present if the ASP-device is reachable at a certain access point of the wireless local network and/or if the ASP-device is reachable with a certain RSSI-value. The wireless local network is in particular a Wi-Fi network or Bluetooth network. RSSI stands for signal strength indicator; the higher this value, the more likely it is that the ASP-device is closer to the access point.
(ii) Preferably, the position of the ASP-device is determined by an indoor positioning system, preferably based on indoor-GPS, more preferably based on triangulation, more preferably based on ultra-wideband ranging.
(iii) Preferably, the position of the ASP-device is determined by a satellite navigation system, such as GPS or Galileo. For example, if the BCU is located at a gate of a fence or wall - i.e. outdoors - the position determination by means of satellite navigation system may be sufficient to meet certain security requirements. Furthermore, it may be sufficient - even for BCUs inside buildings - if it is detected that the ASP is located in or at the building, wherein a satellite navigation system can be sufficient for this purpose.

For the following methods of determining the position of the ASP-device in particular a data link between the ASP-device and the server and/or between the ASP-device and the BCU is/are provided:
(iv) Preferably, the positon of the ASP-device is determined by reading a tag, preferably QR code or RFID chip, provided in the proximity of the BCU with the ASP-device, and sending corresponding information from the ASP-device to the server and/or to the BCU. In "the proximity of the BCU" means that the tag can be at the BCU or close to the BCU. The "corresponding information" preferably contains information about the ASP-device and/or the ASP logged in at the ASP-device. Further, "corresponding information" preferably contains information about the position, wherein the ASP-device receives this information from the tag; for example, the tag contains a number that is compared in the BCU or server with stored data to determine that the ASP-device is on a certain position close to the tag.
(v) Preferably, the positon of the ASP-device is determined by recording the environment of the BCU with a camera of the ASP-device. Thereby, in the ASP-device, and/or in the BCU, and/or in the server the recorded environment is compared with stored data in order to identify the location.

Preferably, the method requires that the ASP identify herself/himself to the ASP-device in order to permit the update, and/or to permit the determination of the position of the ASP-device. This identification can also be done by the ASP logging into the ASP-device or into the appropriate app/software running on the ASP-device.

Preferably, identification at the ASP-device can be done by a password and/or gesture code and/or at least one biometric identification method, preferably fingerprint scanning and/or facial recognition.

Preferably, depending on the ASP that identifies herself/himself, different updates are permitted. Preferably, the method provides that different ASPs may have different trust levels, and certain updates may only be allowed with the appropriate trust level. For example, ASPs with "high trust" and "medium trust" can be provided; depending on the trust level of the ASP, a sensitive update can be performed or not. For example, a simple "door motion speed parameter" can be changed by a medium trust ASP, whereas the "access authorization setting" can only be changed by a high trust ASP.

Preferably, for permitting the update, preferably only for a certain kind of updates, the presence of two ASPs must be detected. In particular, there may be kinds of updates that are permitted without the four-eyes principle and certain kinds of updates that are permitted only when two ASPs are present.

The presence of two ASP can be detected in particular by determine the position of two ASP-devices and/or by identifying the two ASPs themselves at one ASP-device which position is determined.

Different computing units can be used to evaluate the data for detecting the presence of the ASP: preferably the server receives and/or determines the position of the ASP-device and decides whether the ASP is present. Alternatively, the BCU receives and/or determines the position of the ASP-device and decides whether the ASP is present.

As already described, the method according to present invention comprises the step of detecting, preferably by detecting-means, presence of the ASP in the proximity of the BCU. This can be done by determine the position of the ASP-device. Additionally or alternatively it is also provided that the presence of the ASP is detected by identifying the ASP at any BCU, preferably an access controller, of the BMS, in particular with a mechanical or electronic key and/or with biometrical identification. The biometric identification can be done by any means on or in the proximity of the BCU, for example a fingerprint reader or a camera for facial recognition.

In particular, the mechanical or electronic key has only been handed over to certain ASPs, so that identification of the ASP is possible. In the context of the present invention, the identification of the ASP describes in particular that the individual person is identified and/or that it is recognized whether the person belongs to a certain group - which is recognized for example by the use of the correct key.

Preferably, the BCU at which identification takes place, preferably by which identification is performed, is the one to which the update shall be permitted.

In combination with the use of the ASP-device, this additional method, namely the identification at the BCU, can be used for checking (validating) whether the determination of the position by means of the ASP-device is correct and/or to further specifying the determination of the position. Preferably, the invention comprises the building management system (BMS) adapted to carry out the method according to any of the options described herein and/or defined in the claims. All of the optional features described for the method in description or claims are also preferably used within the device, namely the BMS.

The BMS comprising:
(i) a computer program executable on the server and/or on the BCU,
(ii) at least one of the pluralities of BCUs,
(iii) a data link between the BCU and the server,
(iv) and detecting-means adapted to detect presence of an ASP in the proximity of the BCU, preferably by determine the position of a mobile ASP-device to be carried by the ASP.

The computer program executed on the server and/or the BCU is adapted to permit an update of the BCU when presence of the ASP is detected in the proximity of the BCU, wherein the update-data is sent from the server to the BCU via the data link. The "and" combination takes into account that the computer program can consist of several parts, so that it can be executed partially on the server and partially on the BCU.

In particular:
(i) the computer program comprising instructions which, when the program is executed by the server, cause the server to send the update-data to the BCU when, in particular only when, presence of the ASP is detected in the proximity of the BCU,
(ii) and/or the computer program comprising instructions which, when the program is executed on the BCU, causes the BCU to receive the update-data when, in particular only when, presence of the ASP is detected in the proximity of the BCU,
(iii) and/or wherein the computer program comprising instructions which, when the program is executed on the BCU, causes the BCU to process the update-data when, in particular only when, presence of the ASP is detected in the proximity of the BCU.

The detecting-means may be formed by a single device or by a set of different devices, depending on the method used for detecting the presence of the ASP. For example, the detecting-means can be formed as follows:
(i) Preferably, the detecting-means are adapted to determine the position of the ASP-device by checking if the ASP-device is reachable within a wireless local network, preferably reachable by a particular access point of the wireless local network and/or reachable with a certain RSSI-value. The processing or interpretation of the data of the wireless local network can be done in the server or in another computing unit, which represents the detecting-means.
(ii) Preferably, the detecting-means are adapted to determine the position of the ASP-device by an indoor positioning system, preferably based on indoor-GPS, more preferably based on triangulation, more preferably based on ultra-wideband ranging. The processing or interpretation of the data of the indoor positioning system can be done in the server or in another computing unit, which represents the detecting-means.
(iii) Preferably, the detecting-means are adapted to determine the position of the ASP-device by a satellite navigation system, such as GPS or Galileo. The processing or interpretation of the data of the satellite navigation system can be done in the server or in another computing unit, which represents the detecting-means.

For the following options of detecting means a data link between the ASP-device and the server and/or between the ASP-device and the BCU is/are provided.
(iv) Preferably, the detecting-means are adapted to determine the positon of the ASP-device by reading a tag, preferably QR code or RFID chip, provided in the proximity of the BCU with the ASP-device, and sending corresponding information from the ASP-device to the server and/or to the BCU. Thereby, the ASP-device can represent a part of the detecting-means. And as the processing or interpretation of the corresponding information takes place in the BCU or in the server, these devices can also represent a part of the detecting-means.
(v) Preferably, the detecting-means are adapted to determine the positon of the ASP-device by recording the environment of the BCU with a camera of the ASP-device. Thereby, the ASP-device can represent a part of the detecting-means. And as the processing or interpretation of the recorded environment can take place in the BCU or in the server, these devices can also represent a part of the detecting-means.

Preferably, the data link is adapted, so that the update-data is sent from the server to the BCU without going through a mobile device, in particular without going through the ASP-device.

Preferably, the BCU is adapted to controll an access controller, preferably is part of the access controller or is connected to the access controller, wherein the access controller is adapted for blocking and/or unblocking an access gate, in particular door, gate, turnstile, or any kind of barrier.

Preferably, the computer program is adapted, so that the update is permitted automatically, when presence of the ASP is detected in the proximity of the BCU, or so that the update is permitted when presence of the ASP is detected in the proximity of the BCU and when the ASP manually confirms the update.

Preferably, the computer program is adapted, so that the update is performed automatically, when presence of the ASP is detected in the proximity of the BCU, or so that the update is performed when presence of the ASP is detected in the proximity of the BCU and when the ASP manually confirms the update.

Preferably, the computer program is adapted, so that the permission for the update is blocked after a predetermined time period has elapsed after the detection of the presence and/or as soon as it is detected that the ASP is no longer present.

Preferably, the computer program is adapted, so that any update that has already been triggered or started will be completed independently from the presence of the ASP.

Preferably, the computer program is adapted, to require that the ASP identify herself/himself to the ASP-device in order to permit the update, and/or to permit the determination of the position of the ASP-device. Preferably, the computer program is adapted, so that depending on the ASP that identifies herself/himself, different updates are permitted.

Preferably, the computer program is adapted, so that for permitting the update, preferably only for a certain kind of update, the presence of two ASPs must be detected; in particular, wherein the position of two ASP-devices is determined and/or the two ASPs identify themselves at one ASP-device which position is determined.

Preferably, the computer program is adapted, so that the server receives and/or determines the position of the ASP-device and decides whether the ASP is present; or the BCU receives and/or determines the position of the ASP-device and decides whether the ASP is present.

Preferably, the computer program is adapted, so that the presence of the ASP is detected by identifying the ASP at any BCU, preferably an access controller, of the BMS, in particular with a mechanical or electronic key and/or with biometrical identification. Preferably, wherein the BCU at which identification takes place, preferably by which identification is performed, is the one to which the update shall be permitted.

The following describes the invention in more detail with reference to an embodiment.
Fig. 1 shows steps of the inventive method in accordance with an embodiment, and
Fig. 2 shows a schematic view for explaining the inventive method in accordance with the embodiment and for illustrating the inventive building management system (BMS), configured for carrying out the inventive method in accordance with the embodiment.

The invention discloses a method 100 for providing an update to a building control unit, hereinafter referred to as BCU 3, of a building management system, hereinafter referred to as BMS 1.

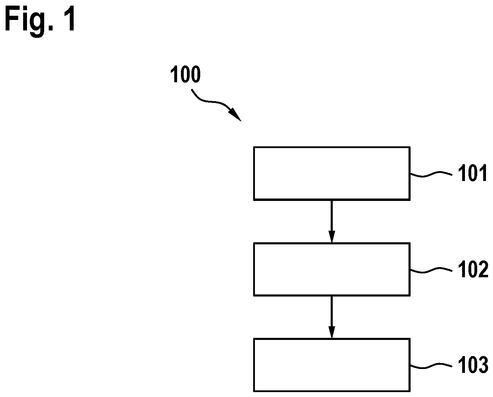

According to Fig. 1, the method 100 comprising following steps:
Step 101: providing a data link 4 between the BCU 3 and a server 2;
Step 102: detecting presence of an authorized service person, hereinafter referred to as ASP 50, in the proximity of the BCU 3, preferably by determine the position of a mobile ASP-device 6 to be carried by the ASP 50;
Step 103: permitting an update of the BCU 3 when presence of the ASP 50 is detected in the proximity of the BCU 3, wherein update-data 5 is sent from the server 2 to the BCU 3 via the data link 4.

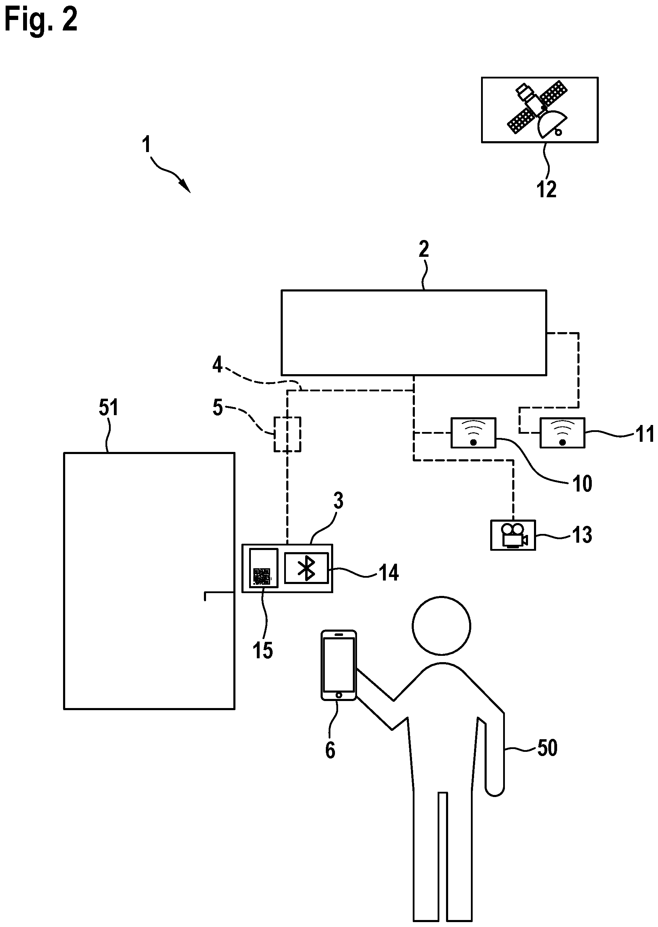

Fig. 2 shows a schematic view for explaining the method 100 and the BMS 1 for carrying out the method 100. The BMS 1 comprising: a computer program executable on the server 2 and/or on the BCU 3; at least one BCU 3; a data link 4 between the BCU 3 and the server 2; and detecting-means adapted to detect presence of an ASP 50 in the proximity of the BCU 3, preferably by determine the position of a mobile ASP-device 6 to be carried by the ASP 50.

The computer program executed on the server 2 and/or on the BCU 3 is adapted to permit an update of the BCU 3 when presence of the ASP 50 is detected in the proximity of the BCU 3, wherein the update-data 5 is sent from the server 2 to the BCU 3 via the data link 4.

According to the embodiment, the update-data 5 is sent from the server 2 to the BCU 3 without going through a mobile device, in particular without going through the ASP-device 6.

According to the embodiment, the BCU 3 controls an access controller and preferably is part of the access controller; alternatively it can be connected to the access controller. The access controller is adapted for blocking and/or unblocking an access gate 51, in Fig. 2 shown as a door.

According to the embodiment, the computer program can be set so that the update is permitted 103 automatically, when presence of the ASP 50 is detected in the proximity of the BCU 3, or the update is permitted 103 when presence of the ASP 50 is detected in the proximity of the BCU 3 and the ASP 50 manually confirms the update.

According to the embodiment, the step of "permitting 103 an update" includes performing the update. In this regard, the following options may be provided by the design of the computer program: sending of the update-data 5 from the server 2 to the BCU 3, when presence of the ASP 50 is detected in the proximity of the BCU 3, and/or receiving the update-data 5 by the BCU 3, when presence of the ASP 50 is detected in the proximity of the BCU 3, and/or processing the update-data, when presence of the ASP 50 is detected in the proximity of the BCU 3. According to the embodiment, the following options may be provided by the design of the computer program: the update is performed automatically, when presence of the ASP 50 is detected in the proximity of the BCU 3, or the update is performed when presence of the ASP 50 is detected in the proximity of the BCU 3 and the ASP 50 manually confirms the update.

According to the embodiment, the permission 103 for the update is preferably blocked after a predetermined time period has elapsed after the detection of the presence and/or as soon as it is detected that the ASP 50 is no longer present. Preferably, any update that has already been triggered or started will be completed independently from the presence of the ASP 50.

The detecting-means may be formed by a single device or by a set of different devices, depending on the method used for detecting 102 the presence of the ASP 50. According to the embodiment, the detecting-means can be formed as follows. Intentionally, many different designs for the detecting-means are shown, which can be used in any combination or individually. In particular, it is sufficient to provide only one of the detecting-means.
(i) The detecting-means of the embodiment can be adapted to determine the position of the ASP-device 6 by checking if the ASP-device 6 is reachable within a wireless local network 10, 14, which can be a wireless local Wi-Fi network 10 or wireless local Bluetooth network 14. The processing or interpretation of the data of the wireless local network 10, 14 can be done in the server 2 or in another computing unit, which represents the detecting-means.
(ii) The detecting-means of the embodiment can be adapted to determine the position of the ASP-device 6 by an indoor positioning system 11, preferably based on indoor-GPS, more preferably based on triangulation, more preferably based on ultra-wideband ranging. The processing or interpretation of the data of the indoor positioning 11 system can be done in the server 2 or in another computing unit, which represents the detecting-means.
(iii) The detecting-means of the embodiment can be adapted to determine the position of the ASP-device 6 by a satellite navigation system 12, such as GPS or Galileo. The processing or interpretation of the data of the satellite navigation system 12 can be done in the server 2 or in another computing unit, which represents the detecting-means.

For the following options of detecting means a data link between the ASP-device 6 and the server 2 and/or between the ASP-device 2 and the BCU 3 is/are provided. This may be a wireless connection, which is not shown in Fig. 2 for the sake of simplicity.
(iv) The detecting-means of the embodiment can be adapted to determine the positon of the ASP-device 6 by reading a tag 15, preferably QR code or RFID chip, provided in the proximity of the BCU 3 with the ASP-device 6, and sending corresponding information from the ASP-device 6 to the server 2 and/or to the BCU 3. Thereby, the ASP-device 6 can represent a part of the detecting-means. And as the processing or interpretation of the corresponding information takes place in the BCU 3 or in the server 2, these devices can also represent a part of the detecting-means.
(v) The detecting-means of the embodiment can be adapted to determine the positon of the ASP-device 6 by recording the environment of the BCU 3 with a camera of the ASP-device 6. Thereby, the ASP-device 6 can represent a part of the detecting-means. And as the processing or interpretation of the recorded environment can take place in the BCU 3 or in the server 2, these devices can also represent a part of the detecting-means.

According to the embodiment, the ASP 50 can identify herself/himself to the ASP-device 6 in order to permit 103 the update, and/or to permit the determination of the position of the ASP-device 6. Thereby, depending on the ASP 50 that identifies herself/himself, different updates can be permitted.

According to the embodiment, it is possible for permitting 103 the update, preferably only for a certain kind of update, the presence of two ASPs 50 must be detected; in particular, wherein the position of two ASP-devices 6 is determined and/or the two ASPs 50 identify themselves at one ASP-device 6 which position is determined.

According to the embodiment, the server 2 receives and/or determines the position of the ASP-device 6 and decides whether the ASP 50 is present. Alternatively, it is possible that the BCU 3 receives and/or determines the position of the ASP-device 6 and decides whether the ASP 50 is present.

The schematic drawing in Fig. 2 also shows the possibility that the presence of the ASP 50 is detected 102 by identifying the ASP 50 at the BCU 3 - in the embodiment an access controller to which the update shall be permitted 103. Thereby a mechanical or electronic key and/or biometrical identification can be used. Fig 2 shows a camera 13 in proximity of the BCU, which can be used for identifying the ASP 50.

### List of reference signs

- 1: building management system (BMS)
- 2: server
- 3: building controll unit (BCU)
- 4: data-link
- 5: update-data
- 6: mobile ASP-device

- 10: wireless local Wi-Fi network
- 11: indoor positioning system (ultra wideband)
- 12: satellite navigation
- 13: camera
- 14: wireless local Bluetooth network
- 15: tag (NFC and/or QR)

- 50: authorized service person (ASP)
- 51: access gate

- 100: method
- 101: providing a data-link
- 102: detecting presence
- 103: permitting update

## Claims

1. A method (100) for providing an update to a building control unit, hereinafter referred to as BCU (3), of a building management system, hereinafter referred to as BMS (1), comprising:
• providing (101) a data link (4) between the BCU (3) and a server (2),
• detecting (102) presence of an authorized service person, hereinafter referred to as ASP (50), in the proximity of the BCU (3) by determine the position of a mobile ASP-device (6) to be carried by the ASP (50),
• permitting (103) an update of the BCU (3) when presence of the ASP (50) is detected in the proximity of the BCU (3), wherein update-data (5) is sent from the server (2) to the BCU (3) via the data link (4).

2. The method of claim 1, wherein the update-data (5) is sent from the server (2) to the BCU (3) without going through a mobile device, in particular without going through the ASP-device (6).

3. The method of any preceding claim, wherein the BCU (3) controls an access controller, preferably is part of the access controller or is connected to the access controller, wherein the access controller is adapted for blocking and/or unblocking an access gate (51), in particular door, gate, turnstile, or any kind of barrier.

4. The method of any preceding claim, wherein
• the update is permitted (103) automatically, when presence of the ASP (50) is detected in the proximity of the BCU (3),
• or wherein the update is permitted (103) when presence of the ASP (50) is detected in the proximity of the BCU (3) and the ASP (50) manually confirms the update.

5. The method of any preceding claim, wherein the step of "permitting (103) an update" includes performing the update, in particular:
• sending of the update-data (5) from the server (2) to the BCU (3), when presence of the ASP (50) is detected in the proximity of the BCU (3),
• and/or receiving the update-data (5) by the BCU (3), when presence of the ASP (50) is detected in the proximity of the BCU (3),
• and/or processing the update, when presence of the ASP (50) is detected in the proximity of the BCU (3).

6. The method of claim 5, wherein
• the update is performed automatically, when presence of the ASP 50 is detected in the proximity of the BCU (3),
• or wherein the update is performed when presence of the ASP (50) is detected in the proximity of the BCU (3) and the ASP (50) manually confirms the update.

7. The method of any preceding claim, wherein the permission (103) for the update is blocked after a predetermined time period has elapsed after the detection of the presence and/or as soon as it is detected that the ASP (50) is no longer present.

8. The method of any preceding claim, wherein any update that has already been triggered or started will be completed independently from the presence of the ASP (50).

9. The method of any preceding claim, wherein, the position of the ASP-device (6) is determined:
• by checking if the ASP-device (6) is reachable within a wireless local network (10, 14), preferably reachable by a particular access point of the wireless local network (10, 14) and/or reachable with a certain RSSI-value,
• and/or by an indoor positioning system (11), preferably based on indoor-GPS, more preferably based on triangulation, more preferably based on ultra-wideband ranging,
• and/or by a satellite navigation system (12), such as GPS.

10. The method of any preceding claim, wherein a data link between the ASP-device (6) and the server (2) and/or between the ASP-device (6) and the BCU (3) is/are provided, and the positon of the ASP-device (6) is determined:
• by reading a tag (15), preferably QR code or RFID chip, provided in the proximity of the BCU (3) with the ASP-device (6), and sending corresponding information from the ASP-device (6) to the server (2) and/or to the BCU (3),
• and/or by recording the environment of the BCU (3) with a camera of the ASP-device (6), whereby in the ASP-device (6), in the BCU (3), and/or in the server (2) the recorded environment is compared with stored data in order to identify the location.

11. Method of any preceding claim, requiring that the ASP (50) identify herself/himself to the ASP-device (6) in order
• to permit the update,
• and/or to permit the determination of the position of the ASP-device (6).

12. Method of claim 11, wherein depending on the ASP (50) that identifies herself/himself, different updates are permitted.

13. Method of claim 11 or 12, wherein for permitting (103) the update, preferably only for a certain kind of update, the presence of two ASPs (50) must be detected; in particular, wherein the position of two ASP-devices (6) is determined and/or the two ASPs (50) identify themselves at one ASP-device (6) which position is determined.

14. Method of any preceding claim,
• wherein the server (2) receives and/or determines the position of the ASP-device (6) and decides whether the ASP (50) is present;
• and/or wherein the BCU (3) receives and/or determines the position of the ASP-device (6) and decides whether the ASP (50) is present.

15. Method of any preceding claim, wherein the presence of the ASP (50) is detected (102) by identifying the ASP (50) at any BCU (3), preferably an access controller, of the BMS (1), in particular with a mechanical or electronic key and/or with biometrical identification.

16. Method according to claim 15, wherein the BCU (3) at which identification takes place, preferably by which identification is performed, is the one to which the update shall be permitted (103).

17. Building management system, hereinafter referred to as BMS (1), for carrying out the method of any preceding claim, comprising:
- a computer program executable on the server (2) and/or in the BCU (3),
- at least one BCU (3) ,
- a data link (4) between the BCU (3) and the server (2),
- and detecting-means adapted to detect presence of an ASP (50) in the proximity of the BCU (3) by determine the position of a mobile ASP-device (6) to be carried by the ASP (50),
- wherein the computer program executed on the server (2) and/or the BCU (3) is adapted to permit an update of the BCU (3) when presence of the ASP (50) is detected in the proximity of the BCU (3), wherein the update-data (5) is sent from the server (2) to the BCU (3) via the data link (4);
in particular:
- wherein the computer program comprising instructions which, when the program is executed by the server (2), cause the server (2) to send the update-data (5) to the BCU (3) when presence of the ASP (50) is detected in the proximity of the BCU (3),
- and/or wherein the computer program comprising instructions which, when the program is executed on the BCU (3), causes the BCU (3) to receive the update-data (5) when presence of the ASP (50) is detected in the proximity of the BCU (3),
- and/or wherein the computer program comprising instructions which, when the program is executed on the BCU (3), causes the BCU (3) to process the update-data (5) when presence of the ASP (50) is detected in the proximity of the BCU (3).
